# EUROPÄISCHE PATENTSCHRIFT

(11) **EP 3 244 717 B1**
(45) Veröffentlichungstag und Bekanntmachung des Hinweises auf die Patenterteilung: **13.03.2019**
(21) Anmeldenummer: 16700416.7
(22) Anmeldetag: 12.01.2016
(51) Int. Cl.: A01B 33/10

(54) **BODENBEARBEITUNGSWERKZEUG**
SOIL-WORKING TOOL
OUTIL DE TRAVAIL DU SOL

(30) Priorität: 12.01.2015 DE 102015100345
(43) Veröffentlichungstag der Anmeldung: 22.11.2017
(73) Patentinhaber: Betek GmbH & Co. KG, 78733 Aichhalden (DE)
(72) Erfinder: SMEETS, Florian, 72270 Baiersbronn (DE); KRÄMER, Ulrich, 77709 Wolfach (DE); SEIFRIED, Fabian, 78662 Herrenzimmern (DE)
(74) Vertreter: Herrmann, Jochen
(86) Internationale Anmeldenummer: PCT/EP2016/050436
(87) Internationale Veröffentlichungsnummer: WO 2016/113239

(56) Entgegenhaltungen:
- DE-A1-102011 051 751
- US-A- 3 529 677
- US-A- 5 427 186

## Beschreibung

Die Erfindung betrifft ein Bodenbearbeitungswerkzeug, insbesondere einen Zinkenkörper für eine Kreiseleggenmaschine zur Bearbeitung einer landwirtschaftlichen Bodenfläche.
Kreiseleggen werden bestimmungsgemäß zur Auflockerung einer Bodenfläche, beispielsweise eines Ackerbodens eingesetzt.
Die Kreiseleggenmaschinen weisen gegenläufig drehende Rotoren auf, an welchen die Zinkenkörper mittels entsprechender Koppelkörper montiert ist. Der Zinkenkörper weist in seinem in Richtung zur Bodenfläche weisenden Endbereich eine Schneide auf, welche vorzugsweise aus einem Hartstoffmaterial gebildet ist und im Arbeitsbetrieb des Zinkenkörpers durch den Boden schneidet. Dabei steht die Standzeit der Schneide in Abhängigkeit des zu bearbeitenden Bodenmaterials, wobei zum Beispiel ein sandhaltiger Boden eine relativ hohe Abrasion der Schneiden, insbesondere des Zinkenkörpers ausbildet.
Die auf den gleichen Anmelder zurückgehende Patentanmeldung DE 10 2011 051 751 A1 offenbart einen Kreiseleggenzinken mit einem Zinkenkörper zur Bearbeitung einer landwirtschaftlichen Bodenfläche, wobei der Zinkenkörper einen Schneidkopf und ein am Schneidkopf sich anschließendes, abgewinkeltes Halteelement umfasst und wobei der Schneidkopf an seiner in Rotationsrichtung weisenden Oberflächenkante mindestens ein Schneidelement aus einem Hartstoffmaterial aufweist.

Das mindestens eine Schneidelement ist als Winkelschneidelement aus einem Hartstoffmaterial ausgebildet und an der seitlichen, in Rotationsrichtung des Zinkenkörpers weisende Oberflächenkante angeordnet.

Aufgrund der Geometrie des Winkelschneidelementes wird ein verbessertes Eindringen des Zinkenkörpers in das Bodenmaterial, sowie ein erhöhter Schutz vor unerwünschter Abrasion am Zinkenkörper ermöglicht.

Es ist Aufgabe der Erfindung, ein Bodenbearbeitungswerkzeug der eingangs erwähnten Art bereit zu stellen, welches einen verbesserten Verschleißschutz des Zinkenkörpers bzw. eine höhere Standzeit eines Zinkenkörpers aufweist.

Die Aufgabe der Erfindung wird dadurch gelöst, dass die mit mindestens einem Schneidelement bestückte Oberflächenkante des Zinkenkörpers eine Eintiefung zur Aufnahme des Schneidelementes aufweist.

Das Schneidelement kann sicher in der Einkerbung verankert werden, wobei es darin seitlich formschlüssig abgestützt ist. Hierdurch können insbesondere seitlich wirkende Querkräfte zuverlässig abgefangen und in die Zinkenspitz abgeleitet werden. Derartige Querkräfte können insbesondere dann auftreten, wenn der Kreiseleggenzinken auf einen größeren Gegenstand, beispielsweise einen Stein auftrifft. Dieser bringt dann dann eine Kraft, die nicht in Umfangsrichtung sondern hierzu im Winkel verläuft, ein. Während des Arbeitseinsatzes bildet zunächst der aus der Einkerbung herausragende Körperbereich des Schneidelementes die wirksame Schneidenkontur. Mit zunehmender Einsatzdauer wird das Schneidelement abgenutzt. Gleichzeitig wird auch die seitlichen Körpergeometrie der Zinkenspitze, welche die Einkerbung bildet abgeschliffen. Dadurch wird kontinuierlich ein Teil des Harnstoffelementes während des Bearbeitungseinsatzes freigestellt, so dass das gesamte Verschleißvolumen des relativ teuren Hartstoffmaterial als des Schneidelementes optimal genutzt.

Gemäß einer bevorzugten Ausgestaltungsvariante der Erfindung kann es vorgesehen sein, dass das Schneidelement in Schneidrichtung eine vorzugsweise konvex ausgebildete Oberfläche aufweist. Diese Oberflächenkontur trägt in optimierter Weisung wechselnden Belastungsrichtungen Rechnung, wie sie beispielsweise beim Auftreffen größere Objekte auftreten. Darüber hinaus wird über die konvexe Oberflächenkontur eine gleichmäßige Kontaktfläche gebildet, die scharfkantige Übergänge vermeidet und damit gegen Bruch unempfindlich ist. Dies hat insbesondere bei spröden Materialien für die Schneidelemente Vorteile.

Gemäß einer möglichen Erfindungsvariante kann es vorgesehen sein, dass das Schneidelement eine vorzugsweise kreissegmentförmige Querschnittsfläche aufweist, wobei die auf einem Radius liegenden Außenflächen des Schneidelementes einen Winkel größer 90° bilden. Hierdurch wird eine massive Schneidengeometrie ermöglicht. Am Zinkenkörper, der mit korrespondierenden Anlageflächen ausgebildet sein kann, können stabile Abstüztzgeometrien verwirklicht werden.

Besonders bevorzugt ist es vorgesehen, dass die in die winkelförmige Einkerbung weisende Oberfläche des Schneidelementes mit der Oberfläche der Einkerbung eine formschlüssige Verbindung bildet. Dann können Querkräfte sicher abgefangen werden.

Eine mögliche Findungsvariante ist dergestalt, dass die Einkerbung äußere Kanten bildet, die quer zur Schneidrichtung des Zinkenkörpers das Schneidelement überragen.

Vorzugsweise ist das Schneidelement mittels einer unlösbaren Verbindung, vorzugsweise mittels einer Löt-oder Klebeverbindung mit der Einkerbung formschlüssig verbunden. Dann kann ein einfacher Fertigungsprozess verwirklicht werden.

Das Schneidelement ist vorzugsweise aus einem Hartstoffmaterial, beispielsweise Hartmetall oder Keramik gebildet.

Eine denkbare Erfindungsvariante ist dergestalt, dass der Zinkenkörper im Bereich der Zinkenspitze eine sich in Längsrichtung der Zinkenspitze erstreckende durchgehende Einkerbung aufweist, in der mehrere Schneidelemente aneinandergereiht befestigt sind. Hierdurch wird eine Segmentierung der Schneidkante zugunsten einer verringerten Bruchgefahr erreicht.

Ein erfindungsgemäßes Bodenbearbeitungswerkzeug kann dergestalt sein, dass die Einkerbung an ihrem, dem Halteteil abgewandten Ende offen ausgebildet ist, und sich das dort angeordnete Schneidelement bis hin zu dem Endbereich der Einkerbung erstreckt. Durch diese einfache Maßnahme wird insbesondere der stark gefährdete stirnseitige Endbereich der Zinkenspitze effektiv und einfach vor abrasivem Verschleiß geschützt. Hierbei kann es auch vorgesehen sein, dass sich an das am offenen Bereich der Einkerbung angeordnete Schneidelement, eine Freifläche der Zinkenspitze anschließt. Auf diese Weise wird im Bereich der Bearbeitungs-Sohle, welche dem Zinkenkörper einer starken Abrassion aussetzt, ein Expansionsbereich gebildet. In diesem Expansionsbereich kann sich das Bodenmaterial entspannen, so dass der Verschleiß verringert wird.

Bei einem Bodenbearbeitungswerkzeug gemäß der Erfindung kann die Einkerbung an ihrem dem Halteelement zugewandten Ende einen Anschlag für das dort angeordnete Schneidelement bilden. Dies hat Vorteile bei der Fertigung. Die Schneidelemente können in der Einkerbung lagegenau positioniert werden. Hierzu wird das 1. Schneidelement an dem Anschlag ausgerichtet und die weiteren Schneidelemente dann aneinandergereiht.

Besonders bevorzugt sind die Schneidelemente von einem Hartstoffstück gebildet. Beispielsweise kann ein Hartmetallkörper verwendet werden.

Ein Bodenbearbeitungswerkzeug gemäß der Erfindung kann dergestalt sein, dass die Zinkenspitze im Anschluss an ihrer in Rotationsrichtung weisenden Oberflächenkante eine Innenseite- und eine Außenseite aufweist, und dass in dem, an das/die Schneidelemente anschließenden Bereich der Innen- und/oder Außenseite wenigstens ein Hartstoffelement angeordnet ist. Dieses zusätzliche Hartstoffelement schützt den Zinkenkörper in dem besonders verschleißgefährdeten Anschlussbereich an die Schneidelemente. Darüber hinaus schützen die Hartstoffelemente den Befestigungsbereich für das Schneidelement, wenn sie sich zumindest bereichsweise über den Bereich hinweg erstrecken, der die Einkerbung bildet. Um die Hartstoffelemente sicher zu fixieren, kann es vorgesehen sein, dass sie in einer in die Innen- bzw. Außenseite eingetiefte Aufnahme eingebracht sind.

Eine denkbare Erfindungsvariante kann dergestalt sein, dass das hat Hartstoffelement an seiner von der Zinkenspitze wegweisenden Oberfläche gewölbt, vorzugsweise konvex ausgebildet ist.

Die Erfindung wird im Folgenden anhand eines in den Zeichnungen dargestellten Ausführungsbeispiels naher erläutert:
Es zeigen:
- Fig. 1: die Darstellung einer Rückseite eines Zinkenkörpers eines Bodenbearbeitungswerkzeuges mit angeordneten Hartstoffelementen ;
- Fig. 2: die Darstellung des Zinkenkörpers mit Hartstoffelement entlang der in Figur 1 dargestellten Schnittlinie A-A ;
- Fig. 3: die Darstellung einer weitere Ausführungsform eines Werkzeugsystems in einer perspektivischen Darstellung;

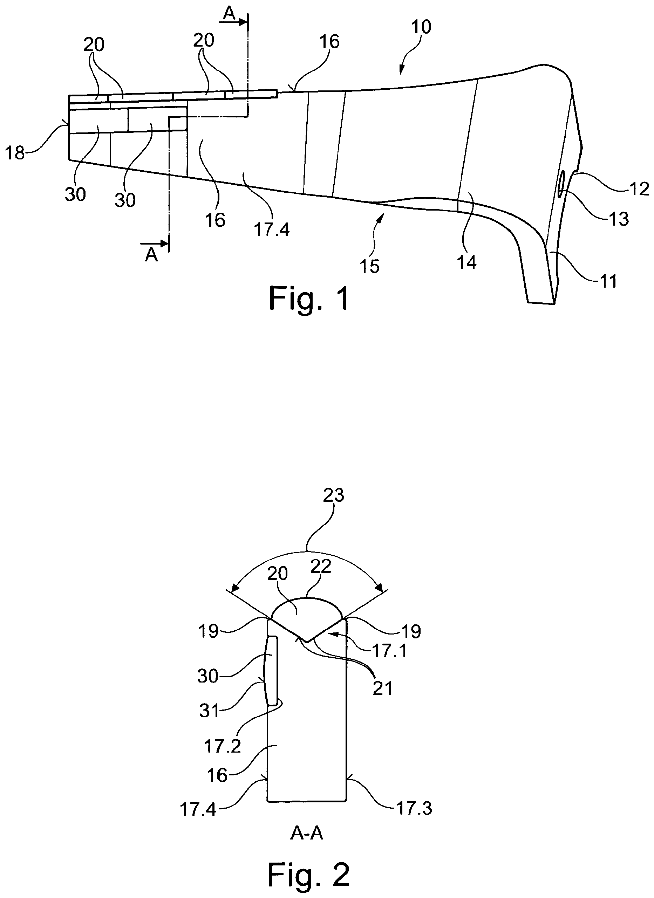

Fig. 1 zeigt einen erfindungsgemäßen Zinkenkörper 10, welcher aus einer Zinkenspitze 17 und einem sich an die Zinkenspitze 17 über einen Übergangsabschnitt 14 anschließendem abgewinkelten Halteelement 11 gebildet ist, wobei der Zinkenkörper 10 mittels einem in eine Befestigungsaufnahme 13 eingreifenden Befestigungsmittel (nicht gezeigt) an einem Zinkenrotor eines Bodenbearbeitungsgerätes befestigbar ist. Das Halteelement 11 eine seitliche Ausnehmungen 12 auf, die an dem Zinkenrotor zentriert werden kann. Im Anschluss an den Übergangsabschnitt 14 weist der Zinkenkörper 10 eine Verschränkung 15 auf. Die Verschränkung 15 geht in die Zinkenspitze 17 über. Mittels der Verschränkung 15 kann die Anstellung der Zinkenspitze 17 gegenüber dem Übergangsabschnitt 14 eingestellt werden. Dement sprechend kann während des Fertigungsprozesses die Zinkenspitze 17 derart gegenüber dem Übergangsabschnitt 14 verdreht werden, dass die Zinkenspitze 17 nicht genau tangential in Umfangsrichtung verläuft sondern leicht angedreht ist. Hierdurch wird das ein Eindringverhalten der Zinkenspitze 17 in das Bodenmaterial verbessert. Darüber hinaus wird durch diese Maßnahme eine verbesserte Auflockerung und Abführung des Bodenmaterials erreicht.
Die Zinkenspitze 17 weist an ihrer in Vorschubrichtung vorderen Seite eine Oberflächenkante 16 auf, die als Arbeitskante dient. Ausweislich Figur 2 ist in diese Oberflächenkante 16. eine Einkerbung 17.1 eingebracht.
Die Zinkenspitze 17 weist auf mindestens einer der sich gegenüberliegenden Oberflächen wenigstens ein Hartstoffelement 30 auf, welches die Zinkenspitze 17 in ihrem rotierenden Betrieb vor einem übermäßigen abrasiven Verschleiß durch das Bodenmaterial schützt. Im vorliegenden Ausführungsbeispiel sind die Hartstoffelemente 30 auf der Außenseite 17.4 der Zinkenspitze 17 angeordnet.
Dabei schließt das, dem Halteelement 11 abgewandte Hartstoffelement 30 mit dem freien Ende der Zinkenspitze 17 im Bereich einer Abschlussseite 18 ab. Wie Figur 2 erkennen lässt, sind die Hartstoffelemente 30 in eine in die Außenseite 17.4 eingetiefte Aufnahme 17.2 eingesetzt. Die Hartstoffelemente 30 können aus Hartmetall bestehen und mit der Zinkenspitze 17 verlötet sein. Wie Figur 2 erkennen lässt, ist es denkbar, dass die Hartstoffelemente 30 eine Deckfläche 31 aufweisen, die eine konvexe Geometrie bildet. In Figur 2 ist weiterhin deutlich erkennbar, dass der Zinkenkörper 10 aus einem Stahlblechzuschnitt als Stanzbiegeteile oder als Brenn-Biegeteil gefertigt ist. Es weist gegenüberliegend der Außenseite 17.4 planparallel eine Innenseite 17.3 auf.
Auf der in Rotationsrichtung des Zinkenkörpers 10 gerichteten(Arbeitskante 16) Oberflächenkante sind wenigstens ein, vorzugsweise mehrere in Verlaufsrichtung des Zinkenkörpers 10 angeordnete Schneidelemente 20 befestigt, welche einen erforderlichen Verschleißschutz für die im Bodenmaterial eintauchende Zinkenspitze 17 bilden und für eine gute Schneidwirkung verantwortlich sind..
Die Zinkenspitze 17 weist an ihrer in Vorschubrichtung vorderen Seite eine Oberflächenkante 16 auf, die als Arbeitskante dient. Ausweislich Figur 2 ist in diese Oberflächenkante 16. eine Einkerbung 17.1 eingebracht, die winkelförmig ausgebildet sein kann. Die Einkerbung 17.1 dient zur formschlüssigen Befestigung wenigstens eines Schneidelementes 20, wobei der innenliegende Öffnungswinkel 23 der Einkerbung 17.1> 90° sein kann. Die Einkerbung 17.1 bildet an den sich gegenüberliegenden Oberflächen der Zinkenspitze 17 Kanten 19 aus, welche das in der winkelförmigen Einkerbung 17.1 befestigte, mit einer vorzugsweise kreissegmentförmigen Schnittfläche gebildete Schneidelement 20 überragen. Aufgrund der Winkelöffnung der Einkerbung 17.1, welche > 90° ist, weisen die seitlich gebildeten Stege der Einkerbung 19 eine größere Materialstärke im Vergleich zu Stegen auf, welche durch eine Einkerbung mit einer Winkelöffnung < 90° gebildet sind. Wie die Figuren 1 und 2 erkennen lassen, ist die Einkerbung 17.1 als durchgängige Ausnehmung in die Zinkenspitze 17 eingebracht. Das dem Halteelemente 11 zugewandte Ende der Einkerbung 17.1 kann dabei so ausgebildet sein, dass es einen Anschlag gebildet. An diesem Anschlag lässt sich das erste Schneidelement 20 definiert ausrichten. Wie Figur 1 erkennen lässt, sind vorzugsweise mehrere Schneidelemente 20 aneinandergereiht um eine bruchstabile Schneidkante zu bilden. Die Schneidelemente 20 sind dabei insbesondere abstandsfrei aneinandergereiht um einen Auswaschen der Verbindungsstelle zwischen den Schneidelementen 20 zu verhindern. Die Schneidelement 20 sind vorzugsweise aus einem Hartstoffmaterial gebildet und als Formteile ausgebildet. Sie können dann mit der Zinkenspitze 17 stoffschlüssig verbunden, beispielsweise verlötet werden. Das dem Halteelemente 11 abgewandte Schneidelement 20 schließt, wie Figur 1 dies erkennen lässt mit dem freien Ende im Bereich der Abschlussseite 18 der Zinkenspitze 17 ab. Auf diese Weise wird ein guter Schutz des stark verschleißbeanspruchten Endbereichs der Zinkenspitze erreicht. Wie Figur 1 erkennen lässt, ist die Zinkenspitze 17 im Bereich ihrer Abschlussseite 18 leicht winklige angestellt (Freiwinkel a). Auf diese Weise wird ein Expansionsbereich im Anschluss an die Schneidkante gebildet, die zu einem verbesserten Abrassionsverhalten beiträgt.
Die winkelförmige Einkerbung 17.1 vermindert die Gefahr eines seitlich Ausbrechens des Schneidelementes 20 beim Eintauchen des Zinkenkörpers 10 in den Bodenbelag.

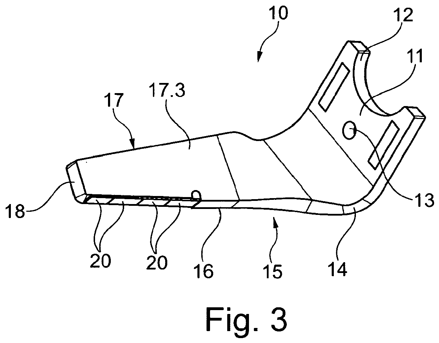

Fig. 3 zeigt eine weitere perspektivische Darstellung eines Zinkenkörpers 10 mit einem erfindungsgemäßen Schneidelement 20, wobei der hier dargestellte Zinkenkörper 10 eine Vorderansicht des in Fig. 1 dargestellten Zinkenkörpers 10 zeigt.

Gleiche Bezugszeichen in den jeweiligen Figuren weisen auf gleiche Bauteile oder technische Merkmale hin.

## Patentansprüche

1. Zinkenkörper (10) für eine Kreiseleggenmaschine zur Bearbeitung einer landwirtschaftlichen Bodenfläche, wobei der Zinkenkörper (10) eine Zinkenspitze (17) und ein an die Zinkenspitze (17) sich anschließendes, vorzugsweise abgewinkeltes Halteelement (11) umfasst und wobei die Zinkenspitze (17) an ihrer in Rotationsrichtung weisenden seitlichen Arbeitskante (16) mindestens ein Schneidelement (20) aufweist,
**dadurch gekennzeichnet,**
**dass** die mit wenigstens einem Schneidelement (20) bestückte, seitliche Arbeitskante (16) des Zinkenkörpers (10) eine winkelförmige Einkerbung (17.1) zur Aufnahme des wenigstens einen Schneidelementes (20) aufweist.

2. Zinkenkörper (10) nach Anspruch 1,
**dadurch gekennzeichnet,**
**dass** das Schneidelement (20) in Schneidrichtung (V) eine vorzugsweise konvex ausgebildete Oberfläche aufweist.

3. Zinkenkörper (10) nach Anspruch 1 oder 2,
**dadurch gekennzeichnet,**
**dass** das Schneidelement (20) eine kreissegmentartige Querschnittfläche aufweist, wobei die auf einem Radius liegenden Außenflächen (21) des Schneidelementes (20) einen Winkel (23) >90° bilden.

4. Zinkenkörper (10) nach einem der Ansprüche 1 bis 3,
**dadurch gekennzeichnet,**
**dass** die in die winkelförmige Einkerbung (17.1) weisenden Oberflächen des Schneidelementes (20) mit den Oberflächen der Einkerbung (17.1) eine formschlüssige Verbindung bilden.

5. Zinkenkörper (10) nach einem der Ansprüche 1 bis 4,
**dadurch gekennzeichnet,**
**dass** die Einkerbung (17.1) äußere Kanten (19) bildet, die in Schneidrichtung (V) des Zinkenkörpers (10) das Schneidelement (20) überragen.

6. Zinkenkörper (10) nach einem der Ansprüche 1 bis 5,
**dadurch gekennzeichnet,**
**dass** das Schneidelement (20) mittels einer unlösbaren Verbindung, vorzugsweise einer Löt- oder Klebeverbindung, mit der Einkerbung (17.1) formschlüssig verbunden ist.

7. Zinkenkörper (10) nach einem der Ansprüche 1 bis 6,
**dadurch gekennzeichnet,**
**dass** das Schneidelement (20) aus einem Hartstoffmaterial, vorzugsweise Hartmetall oder Keramik, gebildet ist.

8. Zinkenkörper (10) nach einem der Ansprüche 1-7,
**dadurch gekennzeichnet,**
**dass** der Zinkenkörper (10) im Bereich der Zinkenspitze (17) eine sich in Längsrichtung der Zinkenspitze (17) erstreckende, durchgehende Einkerbung (17.1) aufweist, in der mehrere Schneidelemente (20) aneinandergereiht befestigt sind.

9. Zinkenkörper (10) nach Anspruch 8,
**dadurch gekennzeichnet,**
**dass** die Einkerbung (17.1) an ihrem dem Halteelement (11) abgewandten Ende offen ausgebildet ist und dass sich das dort angeordnete Schneidelement (20) bis hin zu dem Endbereich der Einkerbung (17.1) erstreckt.

10. Zinkenkörper (10) nach einem der Ansprüche 8 oder 9,
**dadurch gekennzeichnet,**
**dass** die Einkerbung (17.1) an ihrem dem Halterelement (11) zugewandten Ende einen Anschlag für das dort angeordnete Schneidelement (20) bildet.

11. Zinkenkörper (10) nach einem der Ansprüche 1 bis 10,
**dadurch gekennzeichnet,**
**dass** das oder die Schneidelemente (20) von einem Hartstoffformstück gebildet ist/sind.

12. Zinkenkörper (10) nach einem der Ansprüche 1 bis 11,
**dadurch gekennzeichnet,**
**dass** die Zinkenspitze (17) im Anschluss an ihre in Rotationsrichtung weisende Arbeitskante (16) eine Innenseite (17.3) und eine Außenseite (17.4) aufweist, und dass in dem an das/die Schneidelemente (20) anschließenden Bereich der Innen- und/oder Außenseite (17.3; 17.4) wenigstens ein Hartstoffelement (30) angeordnet ist.

13. Zinkenkörper (10) nach Anspruch 12,
**dadurch gekennzeichnet,**
**dass** das Hartstoffelement (30) in eine in die Innen- bzw. Außenseite (17.3; 17.4) eingetiefte Aufnahme (17.2) eingebracht ist.

14. Zinkenkörper (10) nach Anspruch 12 oder 13,
**dadurch gekennzeichnet,**
**dass** das Hartstoffelement (30) an seiner von der Zinkenspitze (17) wegweisenden Oberfläche gewölbt, vorzugsweise konvex ausgebildet ist.

## Claims

1. A tine body (10) for a rotary harrow machine for processing an agricultural ground area, wherein the tine body (10) comprises a tine tip (17) and a preferably angled retaining element (11) attached to the tine tip (17) and wherein the tine tip (17) comprises at least one cutting element (20) at its lateral working edge (16) pointing in the direction of rotation,
**characterised in that**
the lateral working edge (16) of the tine body (10) equipped with at least one cutting element (20) has an angled indentation (17.1) for receiving the at least one cutting element (20).

2. The tine body (10) according to claim 1,
**characterised in that**
the cutting element (20) has, in the cutting direction (V), a preferably convexly shaped surface.

3. The tine body (10) according to claim 1 or 2,
**characterised in that**
the cutting element (20) has a circularly segmented cross-sectional area, wherein the outer surfaces (21), positioned on a radius, of the cutting element (20) form an angle (23) >90°.

4. The tine body (10) according to one of claims 1 to 3,
**characterised in that**
the surfaces of the cutting element (20) which face into the angled indentation (17.1), form a form-fitting connection with the surface of the indentation (17.1).

5. The tine body (10) according to one of claims 1 to 4,
**characterised in that**
the indentation (17.1) forms outer edges (19) which protrude past the cutting element (20) in the cutting direction (V) of the tine body (10).

6. The tine body (10) according to one of claims 1 to 5,
**characterised in that**
the cutting element (20) is connected in a form-fitting manner with the indentation (17.1) by means of a non-detachable connection, preferably a soldered or adhesive connection.

7. The tine body (10) according to one of claims 1 to 6,
**characterised in that**
the cutting element (20) is formed of a hard material, preferably hard metal or ceramic.

8. The tine body (10) according to one of claims 1 to 7,
**characterised in that**
in the area of the tine tip (17), the tine body (10) has a continuous indentation (17.1) extending in the longitudinal direction of the tine tip (17), in which a plurality of cutting elements (20) are attached in a row.

9. The tine body (10) according to claim 8,
**characterised in that**
the indentation (17.1) is formed to be open on its end facing away from the retaining element (11) and that the cutting element (20) arranged there extends to the end area of the indentation (17.1).

10. The tine body (10) according to one of claims 8 or 9,
**characterised in that**
the indentation (17.1) forms, at its end facing towards the retaining element (11), a stop for the cutting element (20) arranged there.

11. The tine body (10) according to one of claims 1 to 10,
**characterised in that**
the cutting element or cutting elements (20) is/are formed of a hard moulded part.

12. The tine body (10) according to one of claims 1 to 11,
**characterised in that**
the tine tip (17) has, connected with its working edge (16) in the direction of rotation, an inner side (17.3) and an outer side (17.4), and **in that** at least one hard material element (30) is arranged in the area of the inner and/or outer side (17.3; 17.4) adjoining the cutting element or elements (20).

13. The tine body (10) according to claim 12,
**characterised in that**
the hard material element (30) is inserted into a receptacle (17.2) sunken into the inner or outer side (17.3; 17.4).

14. The tine body (10) according to claim 12 or 13,
**characterised in that**
the hard material element (30) is designed to be domed, preferably convex on its surface leading away from the tine tip (17).

## Revendications

1. Corps de dent (10) pour une herse rotative destinée au traitement d'une terre arable, le corps en de dent (10) comprenant une pointe de la dent (17) et un élément de retenue (11), de préférence coudé, raccordé à la pointe de la dent (17) et la pointe de la dent (17) présentant sur son arête de travail latérale (16) orientée dans le sens de rotation, au moins un élément de coupe (20),
**caractérisé en ce**
**que** l'arête de travail latérale (16) du corps de dent (10), équipée d'au moins un élément de coupe (20), présente une rainure angulaire (17.1) destinée à loger l'au moins un élément de coupe (20).

2. Corps de dent (10) selon la revendication 1,
**caractérisé en ce**
**que** l'élément de coupe (20) présente dans le sens de coupe (V) une surface de préférence convexe.

3. Corps de dent (10) selon la revendication 1 ou 2,
**caractérisé en ce**
**que** l'élément de coupe (20) présente une section transversale à segments circulaires, les faces extérieures (21) de l'élément de coupe (20) se trouvant sur un rayon formant un angle (23) >90°.

4. Corps de dent (10) selon une des revendications 1 à 3,
**caractérisé en ce**
**que** les faces de l'élément de coupe (20) orientées vers la rainure angulaire (17.1) forment avec les faces de la rainure (17.1) une liaison par complémentarité de forme.

5. Corps de dent (10) selon une des revendications 1 à 4,
**caractérisé en ce**
**que** la rainure (17.1) forme des arêtes extérieures (19) qui font saillie de l'élément de coupe (20) dans le sens de coupe (V) du corps de dent (10).

6. Corps de dent (10) selon une des revendications 1 à 5,
caractérisé en ce
l'élément de coupe (20), au moyen d'une liaison fixe, de préférence une liaison collée ou soudée, est relié à la rainure (17.1) par complémentarité de forme.

7. Corps de dent (10) selon une des revendications 1 à 6,
**caractérisé en ce**
**que** l'élément de coupe (20) est en matériau dur, de préférence en métal dur ou en céramique.

8. Corps de dent (10) selon une des revendications 1 à 7,
**caractérisé en ce**
**que** le corps de dent (10) dans la zone de la pointe de la dent (17) présente une rainure (17.1) continue, s'étendant dans la direction longitudinale de la pointe de la dent (17), rainure dans laquelle sont fixés plusieurs éléments de coupe (20) disposés en ligne.

9. Corps de dent (10) selon la revendication 8,
**caractérisé en ce**
**que** la rainure (17.1) est ouverte sur son extrémité opposée à l'élément de retenue (11) et en ce que l'élément de coupe (20) qui y est disposé s'étend jusqu'à la zone terminale de la rainure (17.1).

10. Corps de dent (10) selon l'une des revendications 8 ou 9,
caractérisé en ce
la rainure (17.1) forme sur son extrémité orientée vers l'élément de retenue (11) une butée pour l'élément de coupe (20) qui y est disposé.

11. Corps de dent (10) selon une des revendications 1 à 10,
**caractérisé en ce**
**que** le ou les élément de coupe (20) sont conçus à partir d'une pièce moulée en matière dure.

12. Corps de dent (10) selon une des revendications 1 à 11,
**caractérisé en ce**
**que** le corps de dent (17) présente, adjacentes à son arête de travail (16) orientée dans le sens de rotation, une face intérieure (17.3) et une face extérieure (17.4) et en ce que dans la zone adjacente à ou aux éléments de coupe (20) des faces extérieure et/ou intérieure (17.3 ; 17.4) est disposé au moins un élément en matière dure (30).

13. Corps de dent (10) selon la revendication 12,
caractérisé en ce
l'élément en matière dure (30) est inséré dans un logement (17.2) creusé dans la face extérieure ou intérieure (17.3, 17.4).

14. Corps de dent (10) selon la revendication 12 ou 13,
caractérisé en ce
l'élément en matière dure (30) est bombé, de préférence convexe, sur sa face opposée à la pointe de la dent (17).
